(19) **Europäisches Patentamt / European Patent Office / Office européen des brevets**

(11) **EP 3 353 793 B1**

(12) **EUROPEAN PATENT SPECIFICATION**

(45) Date of publication and mention
of the grant of the patent:
**10.09.2025 Bulletin 2025/37**

(21) Application number: **16849637.0**

(22) Date of filing: **22.09.2016**

(51) International Patent Classification (IPC):
*H04B 5/79* (2024.01)    *H02J 50/23* (2016.01)
*H01Q 1/24* (2006.01)    *H02J 50/00* (2016.01)

(52) Cooperative Patent Classification (CPC):
**H01Q 1/248; H02J 50/001; H02J 50/23; H04B 5/79;**
H02J 7/00034; H02J 50/80; H02J 50/90

(86) International application number:
**PCT/US2016/053202**

(87) International publication number:
**WO 2017/053631 (30.03.2017 Gazette 2017/13)**

(54) **RF RECEIVER**

HF-EMPFÄNGER

RÉCEPTEUR RF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.09.2015   US 201562222106 P**

(43) Date of publication of application:
**01.08.2018   Bulletin 2018/31**

(73) Proprietor: **California Institute of Technology
Pasadena, CA 91125 (US)**

(72) Inventors:
• **HAJIMIRI, Seyed Ali
Pasadena, California 91125 (US)**
• **BOHN, Florian
Pasadena, California 91125 (US)**
• **ABIRI, Behrooz
Pasadena, California 91125 (US)**

(74) Representative: **Murgitroyd & Company
165-169 Scotland Street
Glasgow G5 8PL (GB)**

(56) References cited:
EP-A1- 2 858 209          EP-A1- 2 858 209
US-A1- 2002 001 009   US-A1- 2010 142 509
US-A1- 2010 208 848   US-A1- 2010 315 045
US-A1- 2011 167 291   US-A1- 2011 218 014
US-A1- 2012 091 799   US-A1- 2012 091 799
US-A1- 2013 137 455   US-A1- 2014 015 344
US-A1- 2015 155 739   US-B1- 6 967 462

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

CROSS-REFERENCE TO RELATED APPLICATIONS

The present application is related to the following US Applications:

- Application No. 14/552,249, filed November 24, 2014, entitled "Active CMOS Recovery Units For Wireless Power Transmission";

- Application No. 14/552,414, filed November 24, 2014, entitled "Generator Unit For Wireless Power Transfer"; and

Application No. 14/830,692, filed August 19, 2015, entitled "Wireless Power Transfer".

TECHNICAL FIELD

The present invention relates to wireless communication, and more particularly to wireless power and data transfer.

BACKGROUND OF THE INVENTION

Electrical energy used in powering electronic devices comes predominantly from wired sources. Conventional wireless power transfer relies on magnetic inductive effect between two coils placed in close proximity of one another. To increase its efficiency, the coil size is selected to be less than the wavelength of the radiated electromagnetic wave. The transferred power diminishes strongly as the distance between the source and the charging device is increased.

A conventional system for providing power to electronic/electrical devices is described in US Patent No. 6,972,462. In accordance with this system, microwave energy is focused by a power transmitter that includes one or more adaptively-phased microwave array emitters onto a device to be charged. Rectennas within the device to be charged receive and rectify the microwave energy and use it for battery charging and/or for primary power.

United States Patent Application Publication 2012/0091799 is directed to a core module for a portable computing device that includes a wireless power receiver module, a battery power module, a power supply module, a processing module, and an RF link interface. The wireless power receiver module, when operable, receives a wireless power transmit signal and converts it into a supply voltage. The battery power module, when operable, outputs a battery voltage. The power supply module, when operable, converts the supply voltage or the battery voltage into one or more power supply voltages. The processing module is operable to select one of the battery voltage, the supply voltage, and one of the one or more power supply voltages to produce a selected voltage. The RF link interface outputs the selected voltage on to an RF link of the portable computing device for providing power to one or more multi mode RF units within the portable computing device.

United States Patent Application Publication 2010/142509 describes a method and system of integrated wireless power and data transmission in a wireless device having a data communication circuit for wireless data communication and a power reception circuit including a charge storage unit. The wireless device is tuned to receive wireless RF signals in a certain frequency band via an antenna. Switching between power reception mode and data communication mode is detected. Received RF signal electrical charge is selectively distributed to the power reception circuit and/or the data communication circuit based on the switching mode and/or strength of the RF signal.

United States Patent Application Publication 2011/218014 describes methods and systems for a three mode wireless energy harvesting concept wherein a triceiver system with a single antenna can be configured to transmit wireless data, receive wireless data and exchange power with other devices. When not being used for exchanging power, the triceiver system with the single antenna can be operably connected to data transfer functions of a wireless device. When used for receiving power, the triceiver antenna can be operably connected to subsystems for converting RF signals to electrical energy. When used for transmitting power, the triceiver antenna can be operably connected to subsystems for converting electrical energy to RF signals.

BRIEF SUMMARY OF THE INVENTION

The present invention provides devices and methods as defined by the claims appended hereto.

BRIEF DESCRIPTION OF THE DRAWINGS

Figure 1 shows a one-dimensional array of radiators forming an RF lens.

Figure 2 is a side view of the RF lens of Figure 1 wirelessly delivering power to a device at a first location.

Figure 3 is a side view of the RF lens of Figure 1 wirelessly delivering power to a device at a second location.

Figure 4 is a side view of the RF lens of Figure 1 wirelessly delivering power to a device at a third location.

Figure 5 shows a two-dimensional array of radiators forming an RF lens.

Figure 6A is a simplified block diagram of a radiator disposed in an RF lens.

Figure 6B is a simplified block diagram of a radiator disposed in an RF lens.

Figure 7 shows a number of electronic components of a device adapted to be charged wirelessly.

Figure 8 is a schematic diagram of an RF lens wirelessly charging a device.

Figure 9 is a schematic diagram of an RF lens concurrently charging a pair of devices.

Figure 10 is a schematic diagram of an RF lens concurrently charging a pair of mobile devices and a stationary device.

Figure 11A shows computer simulations of the electromagnetic field profiles of a one-dimensional RF lens.

Figure 11B is a simplified schematic view of an RF lens used in generating the electromagnetic field profiles of Figure 11A.

Figure 12 shows the variations in computer simulated electromagnetic field profiles generated by the RF lens of Figure 11B as a function of the spacing between each adjacent pair of radiators disposed therein.

Figure 13A is an exemplary computer-simulated electromagnetic field profile of an RF lens and using a scale of -15 dB to 0 dB.

Figure 13B shows the computer-simulated electromagnetic field profile of Figure 13A using a scale of -45 dB to 0 dB.

Figure 14A is an exemplary computer-simulated electromagnetic field profile of the RF lens of Figure 13A and using a scale of -15 dB to 0 dB.

Figure 14B shows the computer-simulated electromagnetic field profile of Figure 14A using a scale of -45 dB to 0 dB.

Figure 15A is an exemplary computer-simulated electromagnetic field profile of an RF lens and using a scale of -15 dB to 0 dB.

Figure 15B shows the computer-simulated electromagnetic field profile of Figure 15A using a scale of -45 dB to 0 dB.

Figure 16A is an exemplary computer-simulated electromagnetic field profile of the RF lens of Figure 15A using a scale of -15 dB to 0 dB.

Figure 16B shows the computer-simulated electromagnetic field profile of Figure 16A using a scale of -45 dB to 0 dB.

Figure 17A shows an exemplary radiator tile having disposed therein four radiators.

Figure 17B shows an RF lens formed using a multitude of the radiator tiles of Figure 17A.

Figure 18 is a simplified block diagram of a radiator disposed in an RF lens.

Figure 19 shows a number of electronic components disposed in a device adapted to be charged wirelessly.

Figure 20 shows an RF lens tracking a device using a signal transmitted by the device.

Figure 21A is a simplified high-level block diagram of a device, in accordance with one embodiment of the present invention.

Figure 21B is a simplified high-level block diagram of a device, in accordance with one embodiment of the present invention.

Figure 21C is a simplified high-level block diagram of a device, in accordance with one embodiment of the present invention.

Figure 21D is a simplified high-level block diagram of a device, in accordance with one embodiment of the present invention.

Figure 21E is a simplified high-level block diagram of a device, in accordance with one embodiment of the present invention.

Figure 21F is a simplified high-level block diagram of a device, in accordance with one embodiment of the present invention.

Figure 22 shows an RF lens transferring power to a device in the presence of a multitude of scattering objects, in accordance with another exemplary embodiment of the present invention.

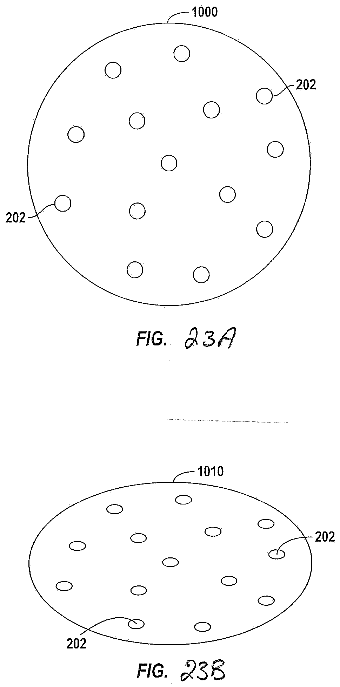

Figure 23A shows an RF lens formed using a multitude of radiators arranged in a circular shape, in accordance with one embodiment of the present invention.

Figure 23B shows an RF lens formed using a multitude of radiators arranged in an elliptical shape, in accordance with one embodiment of the present invention.

DETAILED DESCRIPTION OF THE INVENTION

An RF lens includes a multitude of radiators adapted to transmit radio frequency electromagnetic EM waves (hereinafter alternatively referred to as EM waves, or waves) whose phases and amplitudes are modulated so as to concentrate the radiated power in a small volume of space (hereinafter alternatively referred to as focus point or target zone) in order to power an electronic device positioned in that space. Accordingly, the waves emitted by the radiators are caused to interfere constructively at the focus point. Although the description below is provided with reference to wireless power transfer, the following embodiments of the present invention may be used to transfer any other kind of information wirelessly.

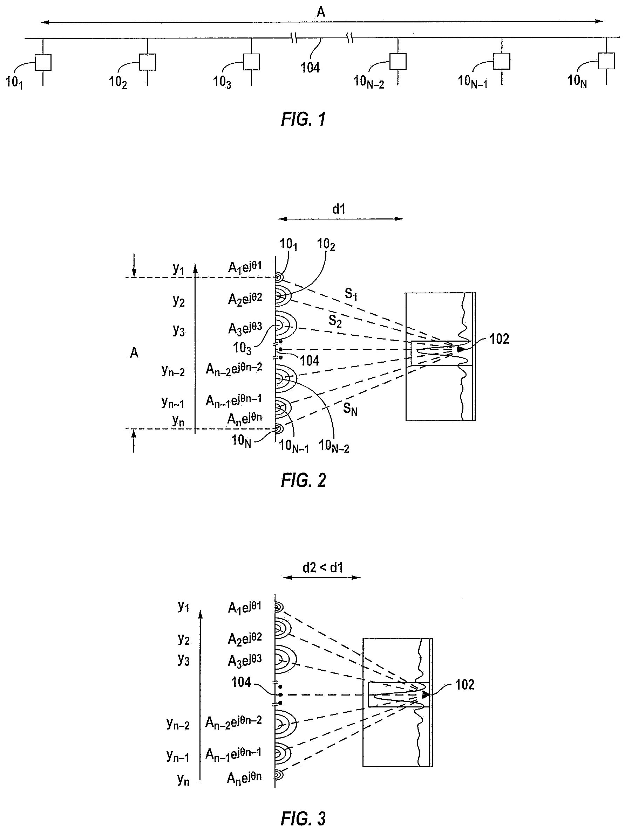

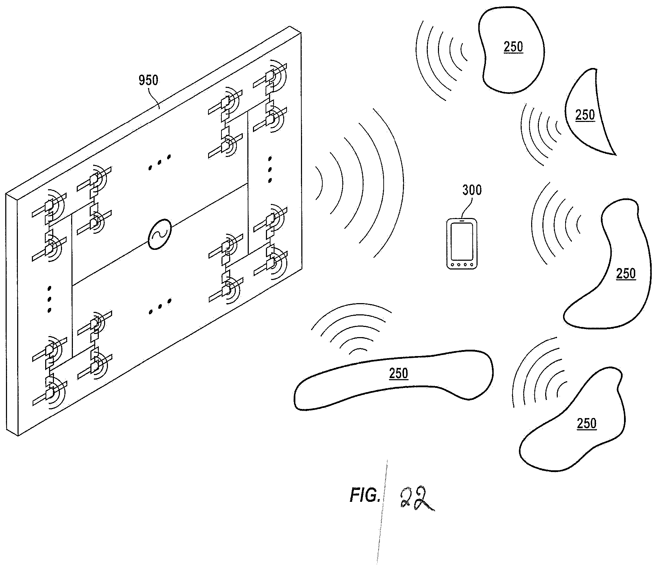

Figure 1 shows a multitude of radiators, arranged in an array 100, forming an RF lens. Array 100 is shown as including N radiators $10_1$, $10_2$, $10_3$... $10_{N-1}$, $10_N$ each adapted to radiate an EM wave whose amplitude and phase may be independently controlled in order to cause constructive interference of the radiated EM waves at a focus point where a device to be charged is located, where N is integer greater than 1. Figure 2 is a side view of the array 100 when the relative phases of the waves generated by radiators $10_i$ (i is an integer ranging from 1 to N) are selected so as to cause constructive interference between the waves to occur near region 102 where a device being wirelessly charged is positioned, i.e., the focus point. Region 102 is shown as being positioned at approximately distance $d_1$ from center 104 of array 100. The distance between the array center and the focus point is alternatively referred to herein as the focal length. Although the following description of an RF lens is provided with reference to a one or two dimensional array of radiators, it is understood that an RF lens in accordance with the present invention may have any other arrangement of the radiators, such as a circular arrangement 1000 of radiators 202 as shown in Figure 22A, or the elliptical arrangement 1010 of radiators 202 shown in Figure 22B.

As seen from Figure 2, each radiator $10_i$ is assumed to be positioned at distance $y_i$ from center 104 of array 100. The amplitude and phase of the wave radiated by radiator $10_i$ are assumed to be represented by $A_i$ and $\theta_i$ respectively. Assume further that the wavelength of the waves being radiated is represented by $\lambda$. To cause the waves radiated by the radiators to interfere constructively in region 102 (i.e., the desired focus point), the following relationship is satisfied between various phases $\theta_i$ and distances $y_i$:

$$\theta_1 + \frac{2\pi}{\lambda}\sqrt{d_1^2 + y_1^2} = \theta_2 + \frac{2\pi}{\lambda}\sqrt{d_1^2 + y_2^2} = \cdots = \theta_N + \frac{2\pi}{\lambda}\sqrt{d_1^2 + y_N^2}$$

Since the phase of an RF signal may be accurately controlled, power radiated from multiple sources may be focused, in accordance with the present invention, onto a target zone where a device to be wirelessly charged is located. Furthermore, dynamic phase control enables the tracking of the device as it moves from its initial location. For example, as shown in Figure 3, if the device moves to a different position-along the focal plane-located at a distance $d_2$ from center point 104 of the array, in order to ensure that the target zone is also located at distance $d_2$, the phases of the sources may be adjusted in accordance with the following relationship:

$$\theta_1 + \frac{2\pi}{\lambda}\sqrt{d_2^2 + y_1^2} = \theta_2 + \frac{2\pi}{\lambda}\sqrt{d_2^2 + y_2^2} = \cdots = \theta_N + \frac{2\pi}{\lambda}\sqrt{d_2^2 + y_N^2} \qquad (1)$$

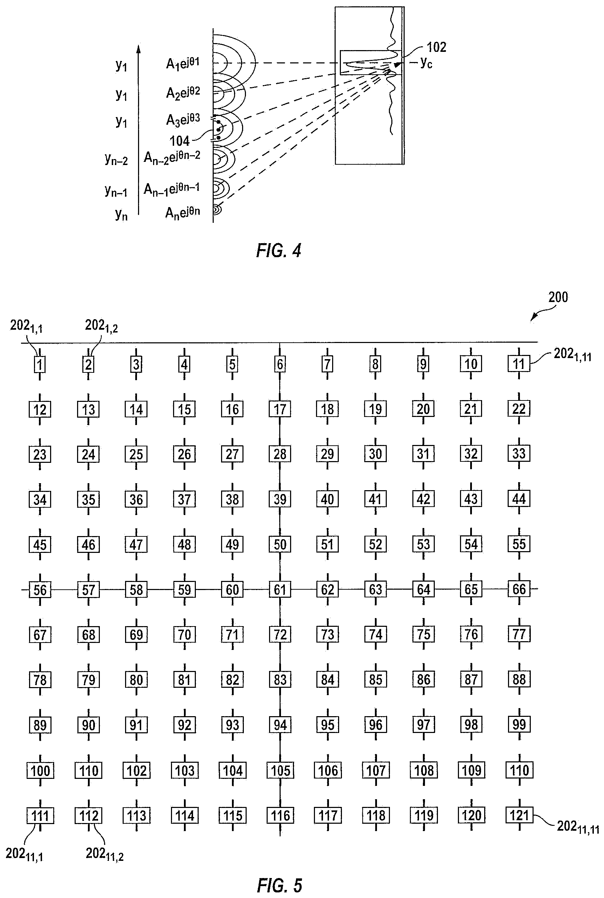

Referring to Fig. 4, if the device moves to a different position away from the focal plane (e.g., to a different point along the y-axis) the radiators' phases are dynamically adjusted, as described below, so as to track and maintain the target zone focused on the device. Parameter $y_c$ represents the y-component of the device's new position, as shown in Figure 4, from the focal plane of the array (i.e, the plane perpendicular to the y-axis and passing through center 104 of array 100).

$$\theta_1 + \frac{2\pi}{\lambda}\sqrt{d_2^2 + (y_1 - y_c)^2} = \theta_2 + \frac{2\pi}{\lambda}\sqrt{d_2^2 + (y_2 - y_c)^2} = \cdots = \theta_N + \frac{2\pi}{\lambda}\sqrt{d_2^2 + (y_N - y_c)^2}$$

$$(2)$$

The amount of power transferred is defined by the wavelength $\lambda$ of the waves being radiated by the radiators, the array span or array aperture A as shown in Figure 1, and the focal length, i.e. ($\lambda F/A$).

In one example, the distance between each pair of radiators is of the order of the wavelength of the signal being radiated. For example, if the frequency of the radiated wave is 2.4 GHz (i.e., the wavelength is 12.5 cm), the distance between each two radiators may be a few tenths to a few tens of the wavelengths, that may vary depending on the application.

An RF lens, in accordance with the present invention, is operative to transfer power wirelessly in both near-field and far field regions. In the optical domain, a near field region is referred to as the Fresnel region and is defined as a region in which the focal length is of the order of the aperture size. In the optical domain, a far field region is referred to as the Fraunhofer region and is defined as a region in which the focal length (F) is substantially greater than ($2A^2/\lambda$).

To transfer power wirelessly to a device, in accordance with the present invention, the radiator phases are selected so as to account for differences in distances between the target point and the radiators. For example, assume that the focal length $d_1$ in Figure 2 is of the order of the aperture size A. Therefore, since distances $S_1, S_2, S_3.....S_N$ are different from one another, corresponding phases $\theta_1, \theta_2, \theta_3...\theta_N$ of radiators $10_1, 10_2, 10_3...10_N$ are varied so as to satisfy expression (1), described above. The size of the focus point (approximately $\lambda F/A$) is relatively small for such regions because of the diffraction limited length.

A radiator array, in accordance with the present invention, is also operative to transfer power wirelessly to a target device in the far field region where the focal length is greater than ($2A^2/\lambda$). For such regions, the distances from the different array elements to the focus spot are assumed be to be the same. Accordingly, for such regions, $S_1 = S_2 = S_3.....= S_N$, and $\theta_1 = \theta_2 = \theta_3...=\theta_N$. The size of the focus point is relatively larger for such regions and thus is more suitable for wireless charging of larger appliances.

Figure 5 shows an RF lens 200. RF lens 200 is shown as including a two dimensional array of radiators $202_{i,j}$ arranged along rows and columns. Although RF lens 200 is shown as including 121 radiators $202_{i,j}$ disposed along 11 rows and 11 columns (integers i and j are indices ranging from 1 to 11) it is understood that an RF lens may have any number of radiators disposed along U rows and V columns, where U and V are integers greater one. In the following description, radiators $202_{i,j}$ may be collectively or individually referred to as radiators 202.

As described further blow, the array radiators are locked to a reference frequency, which may be a sub-harmonic (n=1, 2, 3 ... ) of the radiated frequency, or at the same frequency as the radiated frequency. The phase of the wave radiated by each radiator are controlled independently in order to enable the radiated waves to constructively interfere and concentrate their power onto a target zone within any region in space.

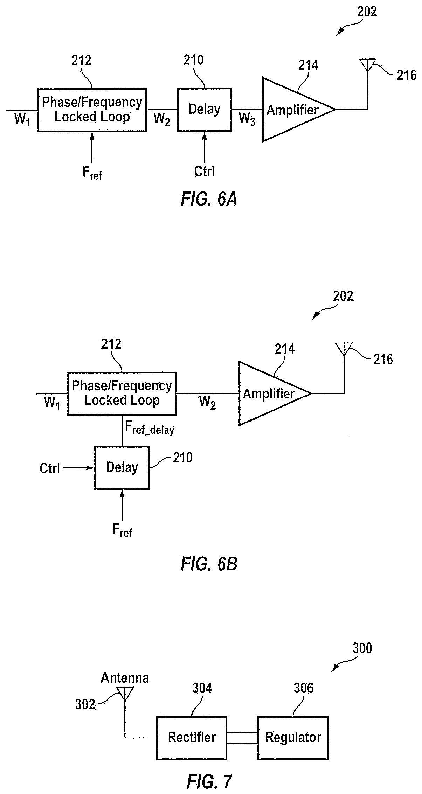

Figure 6A is a simplified block diagram of a radiator 202 disposed in RF lens 200. As seen, radiator 202 is shown as including, in part, a programmable delay element (also referred to herein as phase modulator) 210, a phase/frequency locked loop 212, a power amplifier 214, and an antenna 216. Programmable delay element 210 is adapted to delay signal $W_2$ to generate signal $W_3$. The delay between signals $W_2$ and $W_3$ is determined in accordance with control signal Ctrl applied to the delay element. In one example, phase/frequency locked loop 212 receives signal $W_1$ as well as a reference clock signal having a frequency $F_{ref}$ to generate signal $W_2$ whose frequency is locked to the reference frequency $F_{ref}$. In another example, signal $W_2$ generated by phase/frequency locked loop 212 has a frequency defined by a multiple of the reference frequency $F_{ref}$. Signal $W_3$ is amplified by power amplifier 214 and transmitted by antenna 216. Accordingly and as described above, the phase of the signal radiated by each radiator 202 may be varied by an associated programmable delay element 210 disposed in the radiator.

Figure 6B is a simplified block diagram of a radiator 202 disposed in RF lens 200. As seen, radiator 202 is shown as including, in part, a programmable delay element 210, a phase/frequency locked loop 212, a power amplifier 214, and an antenna 216. Programmable delay element 210 is adapted to delay the reference clock signal $F_{ref}$ thereby to generate a delayed reference clock signal $F_{ref\_Delay}$. The delay between signals $F_{ref}$ and $F_{ref\_Delay}$ is determined in accordance with control signal Ctrl applied to the delay element 210. Signal $W_2$ generated by phase/frequency locked loop 212 has a frequency locked to the frequency of signal $F_{ref\_Delay}$ or a multiple of the frequency of signal $F_{ref\_Delay}$. In other examples (not shown), the delay element is disposed in and is part of phase/frequency locked loop 212. In yet other examples (not shown), the radiators may not have an amplifier.

Figure 7 shows a number of components of a device 300 adapted to be charged wirelessly. Device 300 is shown as including, in part, an antenna 302, a rectifier 304, and a regulator 306. Antenna 302 receives the electromagnetic waves radiated by a radiator, in accordance with the present invention. Rectifier 304 is adapted to convert the received AC power to a DC power. Regulator 306 is adapted to regulate the voltage signal received from rectifier 304 and apply the regulated voltage to the device. High power transfer efficiency is obtained, in one example, if the aperture area of the receiver antenna is comparable to the size of the target zone of the electromagnetic field. Since most of the radiated power is concentrated in a small volume forming the target zone, such a receiver antenna is thus optimized to ensure that most of the radiated power is utilized for charging up the device. In one example, the device may be retro-fitted externally with components required for wireless charging. In another example, existing circuitry present in the charging device, such as antenna, receivers, and the like, may be used to harness the power.

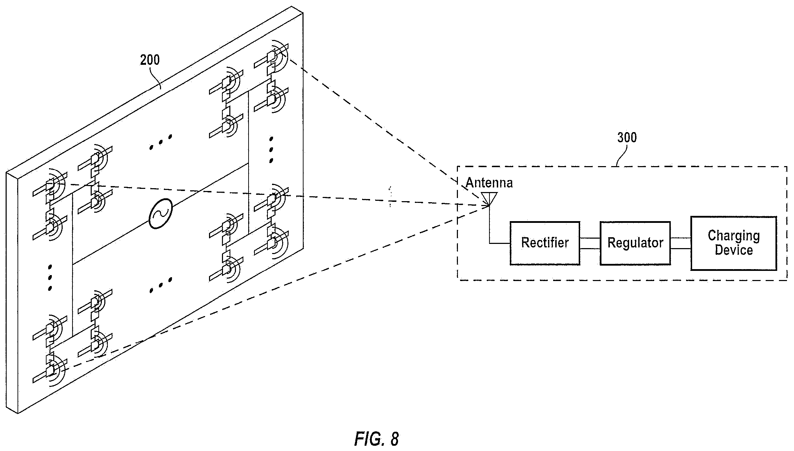

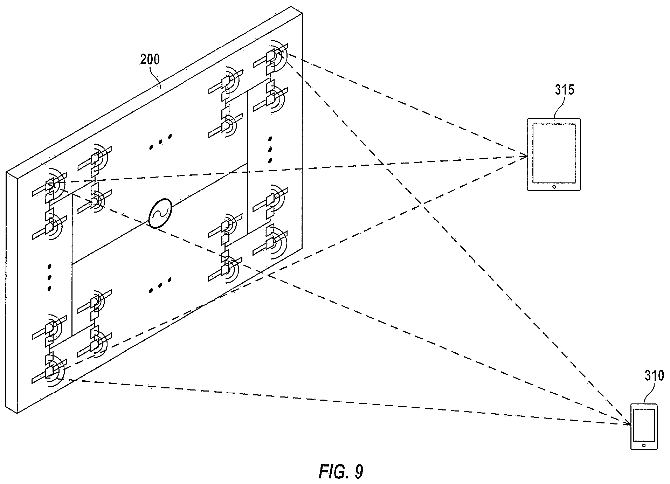

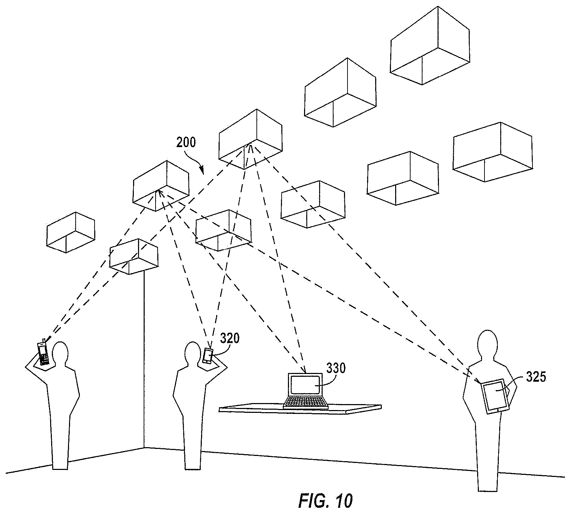

Figure 8 is a schematic diagram of RF lens 200 wirelessly charging device 300. In some examples, RF lens 200 wirelessly charges multiple devices concurrently. Figure 9 shows RF lens 200 concurrently charging devices 310, and 315 using focused waves of similar or different strengths. Figure 10 shows RF lens 200 wireless charging mobile devices 320, 325 and stationary device 330 all of which are assumed to be indoor.

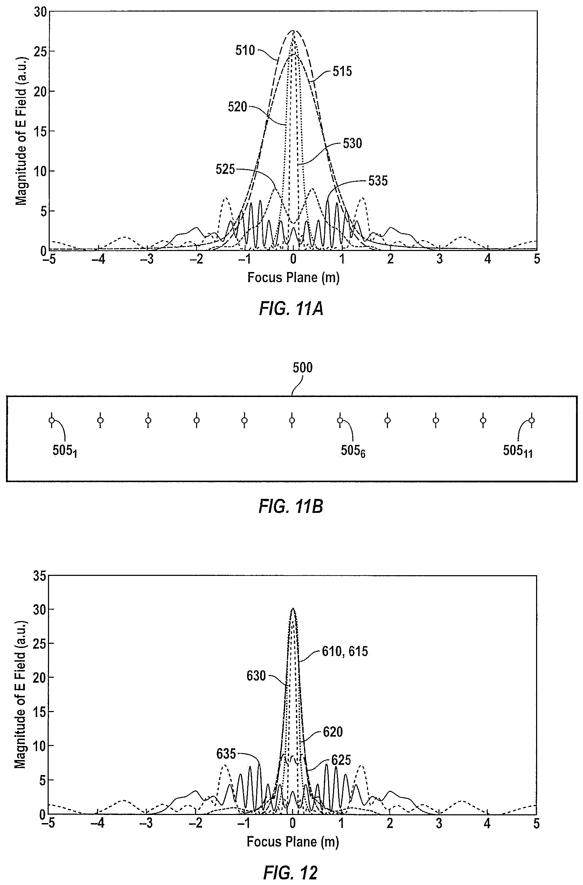

Figure 11A shows computer-simulated electromagnetic field profiles generated by a one-dimensional RF lens at a distance 2 meters away from the RF lens having an array of 11 isotropic radiators. The beam profiles are generated for three different frequencies, namely 200 MHz (wavelength 150 cm), 800 MHz (wavelength 37.5 cm), and 2400 MHz (wavelength 12.50 cm). Since the distance between each pair of adjacent radiators of the RF lens is assumed to be 20 cm, the RF lens has an aperture of 2 m. Therefore, the wavelengths are of the order of aperture size and focal length of the radiator. Figure 11B is a simplified schematic view of such an RF lens 500 having 11 radiators $505_k$ that are spaced 20 cm apart from one another, where K is an integer ranging from 1 to 11.

Plots 510, 520 and 530 are computer simulations of the electromagnetic field profiles respectively for 200 MHz, 800 MHz, and 2400 signals radiated by radiator 500 when the relative phases of the various radiators are selected so as to account for the path differences from each of radiators $505_k$ to the point located 2 meters away from radiator $505_6$ in accordance with expression (1) above. For each of these profiles, the diffraction limited focus size is of the order of the wavelengths of the radiated signal. Plots 515, 525 and 535 are computer simulations of the electromagnetic field profiles at a distance 2 meters away from the radiator array for 200 MHz, 800 MHz, and 2400 signals respectively when the phases of radiators $505_k$ were set equal to one another.

As seen from these profiles, for the larger wavelength having a frequency of 200 MHz (i.e, plots 510, 515), because the path differences from the individual radiators to the focus point are not substantially different, the difference between profiles 510 and 515 is relatively unpronounced. However, for each of 800 MHz and 2400 MHz frequencies, the EM confinement (focus) is substantially more when the relative phases of the various radiators are selected so as to account for the path differences from the radiators $505_k$ to the focus point than when radiator phases are set equal to one another. Although the above examples are provided with reference to operating frequencies of 200 MHz, 800 MHz, and 2400 MHz, it is understood that any other operating frequency may be used, such as 5.8 GHz, 10 GHz, and 24 GHz.

Figure 12 shows the variations in computer simulated electromagnetic field profiles generated by RF lens 500-at a distance of 2 meters away from the RF lens-as a function of the spacing between each adjacent pair of radiators. The RF lens is assumed to operate at a frequency of 2400 MHz. Plots 610, 620, and 630 are computer simulations of the field profiles generated respectively for radiator spacings of 5 cm, 10 cm, and 20 cm after selecting the relative phases of the various radiators to account for the path differences from various radiators $505_k$ to the point 2 meters away from the RF lens, in accordance with expression (1) above. Plots 615, 625, and 650 are computer simulations of the field profiles generated respectively for radiator spacings of 5 cm, 10 cm, and 20 cm assuming all radiators disposed in RF lens 500 have equal phases. As is seen from these plots, as the distance between the radiators increases-thus resulting in a larger aperture size-the EM confinement also increases thereby resulting in a smaller focus point.

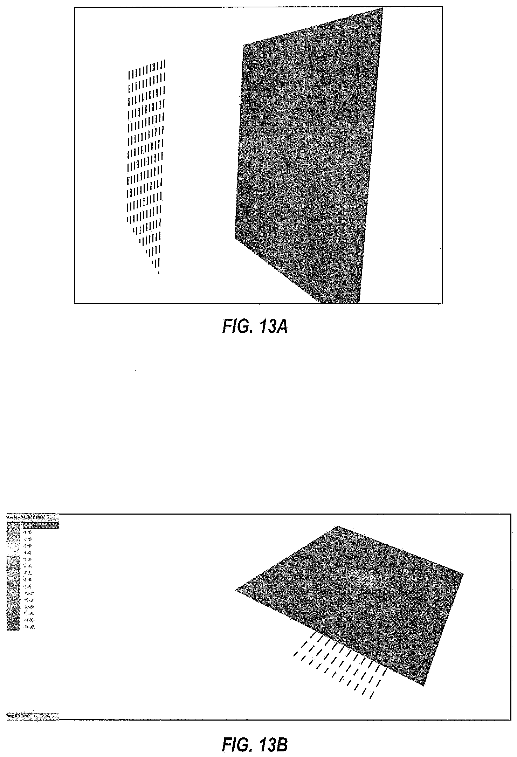

Figure 13A is the computer simulation of the EM profile of an RF lens at a distance 3 meters away from an RF lens having disposed therein a two-dimensional array of Hertzian dipoles operating at a frequency of 900 MHz, such as RF lens 200 shown in Figure 5. The spacing between the dipole radiators are assumed to be 30 cm. The relative phases of the radiators were selected so as to account for the path differences from the radiators to the focal point, assumed to be located 3 meters away from the RF lens. In other words, the relative phases of the radiators is selected to provide the RF lens with a focal length of approximately 3 meters. The scale used in generating Figure 13A is -15 dB to 0 dB. Figure 13B shows the EM profile of Figure 13A using a scale of -45 dB to 0 dB.

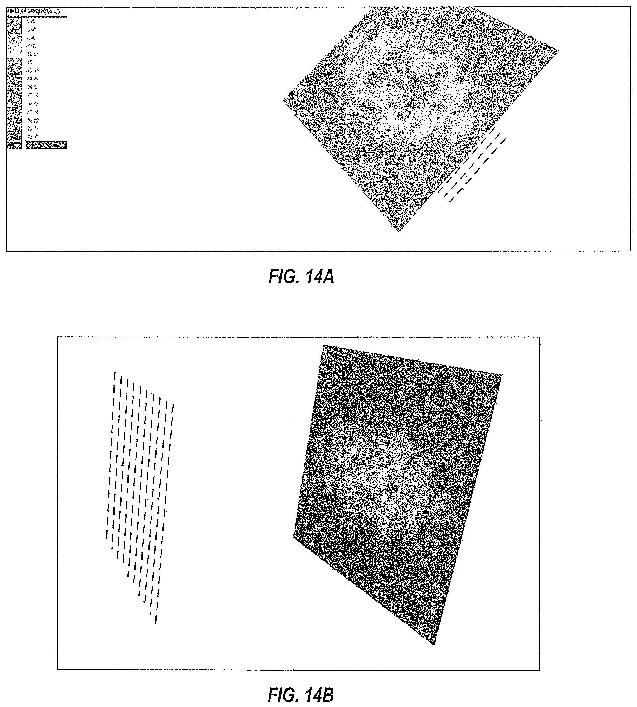

Figure 14A is the computer simulation of the EM profile of the RF lens of Figures 13A/13B at a distance 2 meters away from the focal point, i.e., 5 meters away from the RF lens. As is seen from Figure 14A, the radiated power is diffused over a larger area compared to those shown in Figures 13A and 13B. The scale used in generating Figure 14A is -15 dB to 0 dB. Figure 14B shows the EM profile of Figure 14A using a scale of -45 dB to 0 dB.

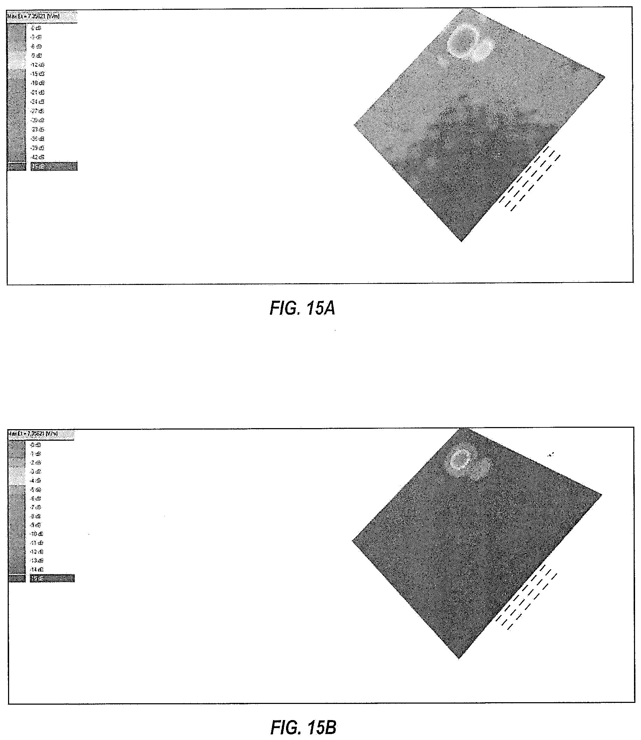

Figure 15A is the computer simulation of the EM profile of an RF lens at a distance 3 meters away from the RF lens having disposed therein a two-dimensional array of Hertzian dipoles operating at a frequency of 900 MHz. The spacing between the dipole radiators are assumed to be 30 cm. The relative phases of the radiators are selected so as to account for the path differences from the radiators to the focal point, assumed to be located 3 meters away from the RF lens and at an offset of 1.5 m from the focal plane of the RF lens, i.e., the focus point has a y-coordinate of 1.5 meters from the focal plane (see Figure 4). The scale used in generating Figure 15A is -15 dB to 0. Figure 15B shows the EM profile of Figure 15A using a scale of -45 dB to 0 dB.

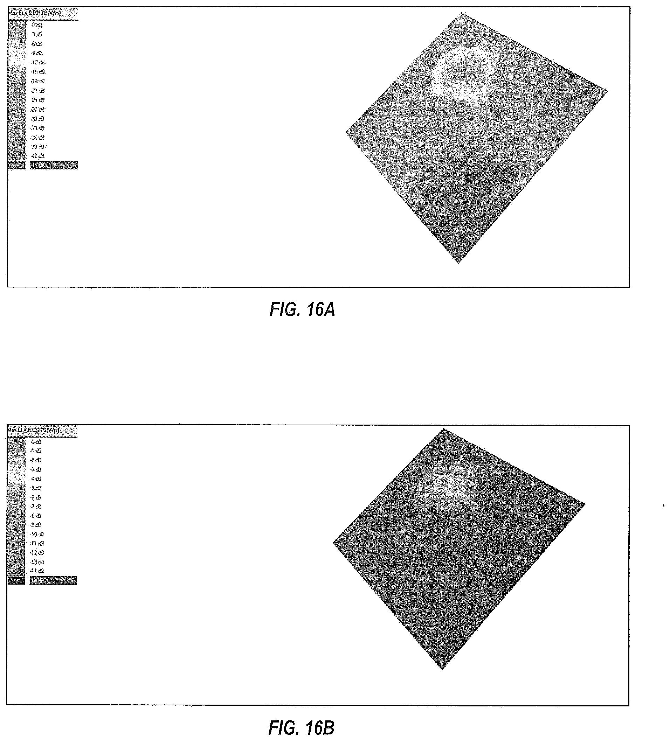

Figure 16A is the computer simulation of the EM profile of the RF lens of Figures 15A/15B at a distance 2 meters away from the focal point, i.e., 5 meters away from the x-y plane of the RF lens. As is seen from Figure 16A, the radiated power is diffused over a larger area compared to that shown in Figure 15A. The scale used in generating Figure 16A is -15 dB to 0 dB. Figure 16B shows the EM profile of Figure 16A using a scale of -45 dB to 0 dB. The EM profiles shown in Figures 13A, 13B, 14A, 14B 15A, 15B, 16A, 16B demonstrate the versatility of an RF lens, in accordance with the present invention, in focusing power at any arbitrary point in 3D space.

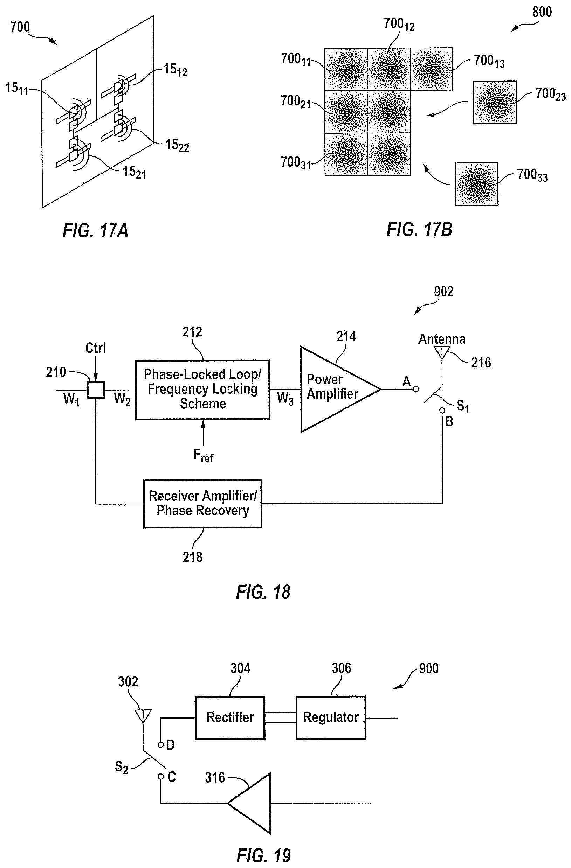

In accordance with one aspect of the present invention, the size of the array forming an RF lens is configurable and may be varied by using radiator tiles each of which may include one or more radiators. Figure 17A shows an example of a radiator tile 700 having disposed therein four radiators $15_{11}$, $15_{12}$, $15_{21}$, and $15_{22}$. Although radiator tile 700 is shown as including four radiators, it is understood that a radiator tile, in accordance with one aspect of the present invention, may have fewer (e.g., one) or more than (e.g., 6) four radiators. Figure 17B shown an RF lens 800 initially formed using 7 radiator tiles, namely radiator tiles $700_{11}$, $700_{12}$, $700_{13}$, $700_{21}$, $700_{22}$, $700_{31}$, $700_{31}$-each of which is similar to radiator tile 700 shown in Figure 17A-and being provided with two more radiator tiles $700_{23}$ and $700_{33}$. Although not shown, it is understood that each radiator tile includes the electrical connections necessary to supply power to the radiators and deliver information from the radiators as necessary. In one example, the radiators formed in the tiles are similar to radiator 202 shown in Figure 6.

In accordance with one aspect of the present invention, the RF lens is adapted to track the position of a mobile device in order to continue the charging process as the mobile device changes position. To achieve this, in one example, a subset or all of the radiators forming the RF lens include a receiver. The device being charged also includes a transmitter adapted to radiate a continuous signal during the tracking phase. By detecting the relative differences between the phases (arrival times) of such a signal by at least three different receivers formed on the RF lens, the position of the charging device is tracked.

Figure 18 is a simplified block diagram of a radiator 902 disposed in an RF lens, such as RF lens 200 shown in Figure 5. Radiator 902 is similar to radiator 202 shown in Figure 6, except that radiator 902 has a receiver amplifier and phase recovery circuit 218, and a switch $S_1$. During power transfer, switch $S_1$ couples antenna 216 via node A to power amplifier 214 disposed in the transmit path. During tracking, switch $S_1$ couples antenna 216 via node B to receiver amplifier and phase recovery circuit 218 disposed in the receive path to receive the signal transmitted by the device being charged.

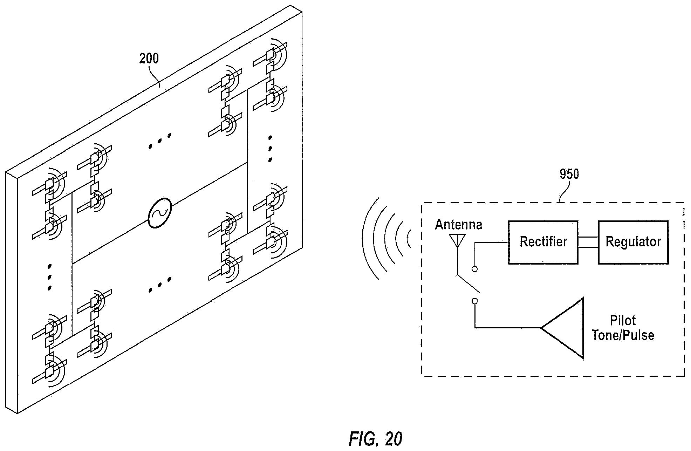

Figure 19 shows a number of components of a device 900 adapted to be charged wirelessly. Device 900 is similar to device 300 shown in Figure 7, except that device 900 has a transmit amplifier 316, and a switch $S_2$. During power transfer, switch $S_2$ couples antenna 302 via node D to rectifier 304 disposed in receive path. During tracking, switch $S_2$ couples antenna 302 via node C to transmit amplifier 316 to enable the transmission of a signal subsequently used by the RF lens to detect the position of device 300. Figure 20 shows RF lens 200 tracking device 900 by receiving the signal transmitted by device 900.

A radiator, in addition to transferring RF power to a device wirelessly, may also wirelessly transfer modulated data to such a device. For example, a radiator may operate as a wireless local area network (WLAN) router to direct signal power toward other such routers or receivers (WLAN or otherwise) to increase the received signal power by orders of magnitude and thereby increase the range, coverage and wireless data rates, as well as reduce the effect of multi-path propagation of the RF signal and power. Transferring wireless signal and/or power, in conformity with any communication standards, such as WiFi, Zigbee, Bluetooth, GSM, GPRS, Edge, and UMTS, to a receiving device, and tracking the location of the device as it moves through physical space, greatly increases the range of the data link and achievable data rates.

Because the power levels required for data transmission are typically orders of magnitude lower than the power levels for wireless power transfer, both power and data transmission may be performed concurrently. In other words, for any given amount of emitted power by a generation unit, the range of wireless power transfer is smaller than the range for wireless data transmission. Therefore, a device that is in range for wireless power transfer, is also in range for wireless data transmission. Furthermore, the amount of power siphoned off in detecting the transmitted data signal is typically much smaller compared to the power available for concurrently powering the device. In addition, a device that may be charged wirelessly can also operate over the relatively narrow range of frequencies around the center frequency spanned by most signal modulation schemes used in data transmission.

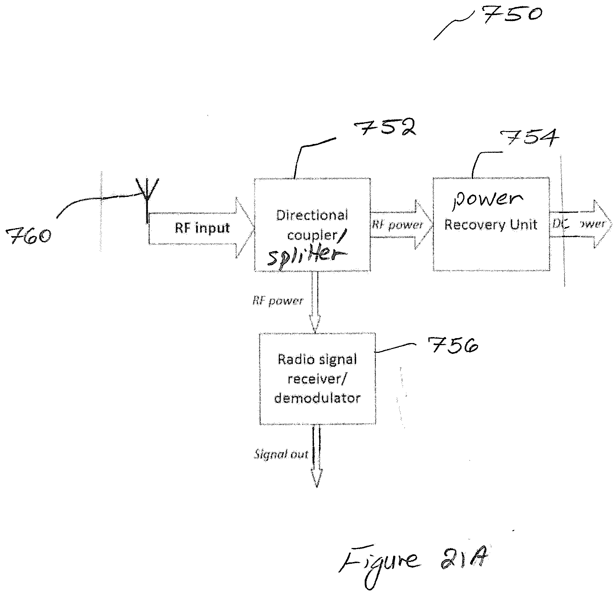

Figure 21A is a simplified high-level block diagram of a device 750 (e.g., cellular phone, camera, wearable device, toy), in accordance with one embodiment of the present invention. Device 750 is shown as including, in part, an antenna 760, a directional power splitter/coupler (alternatively referred to herein as coupler) 752, a power recovery unit 754, and a radio signal receiver/demodulator (alternatively referred to herein as receiver) 756. Antenna 760 is adapted to receive a signal from a radiator or an array of radiators, as described for example above, and deliver the received signal to coupler 752. The signal received by the antenna is a modulated signal that carries information/data as well as RF power, both of which are transmitted using the same frequency. Coupler 752 is adapted to transfer a first portion of the received RF signal to receiver 756 and a second portion of the received signal to power recovery unit 754. Receiver 756 demodulates the received signal to recover the transmitted data. Power recovery unit 754 is adapted to convert the received RF signal to a DC power to power device 750 or charge device 750's battery. Although not shown, it is understood that device 750 may use filters and/or transistors instead of coupler 752 to distribute the received RF power between power recovery unit 754 and receiver 756. US Patent No. 10,320,242 (US Application No. 14/552,249, filed November 24, 2014), entitled "Active CMOS Recovery Units For Wireless Power Transmission" describes in detail various embodiments of power recovery unit 754. In one embodiment, directional coupler/splitter 752 is adjustable (via a controller not shown in Figure 21A) that can vary the split ratio so as to change the amount of power coupler/splitter 752 provides to receiver 756 relative to the power it provides to power recovery unit 754.

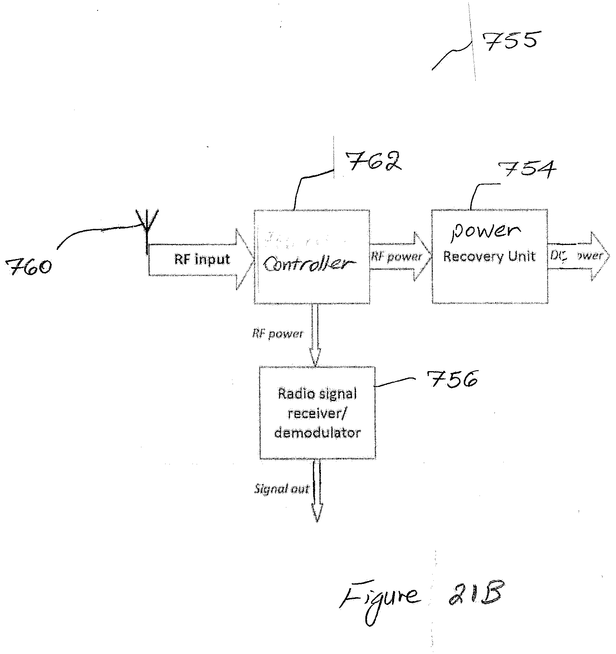

Figure 21B is a simplified high-level block diagram of a device 755, in accordance with one embodiment of the present invention. Device 750 is shown as including, in part, an antenna 760, a controller 762, a power recovery unit 754, and a radio signal receiver/demodulator (hereinafter receiver) 756. Antenna 760 is adapted to receive a signal from a radiator or an array of radiators, as described above, and deliver the received signal to controller 762. Controller 762 is adapted to distribute the received RF power in accordance with an inverse ratio of the impedances of receiver 756 and power recovery unit 754. Controller 762 may be further adapted to vary the impedances seen at its output terminals such that the output impedance having a closer value to the impedance seen at the input of controller 762 receives a higher amount of the received RF power.

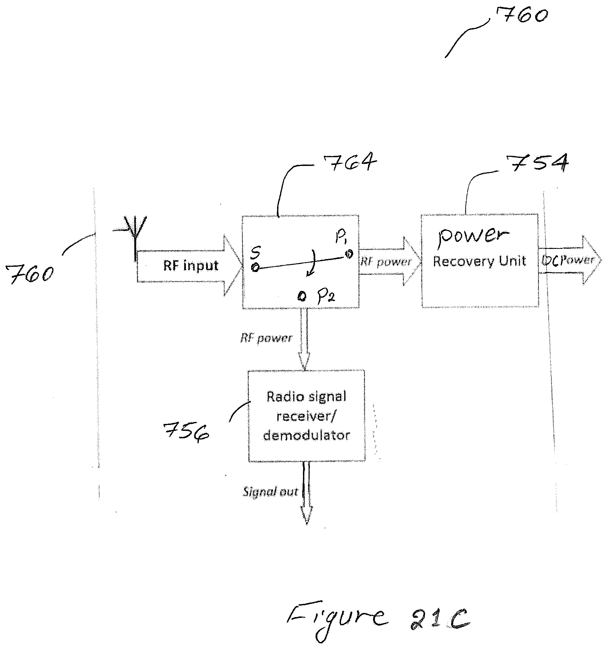

Figure 21C is a simplified high-level block diagram of a device 760, in accordance with another embodiment of the present invention. Device 760 is similar to device 750 except that device 760 uses a switch 764 in place of coupler 752. When switch 764 is in position $P_1$, all of the received RF power is delivered to power recovery unit 754 thereby to charge device 760. When switch 764 is in position $P_2$, all of the received RF power is delivered to receiver 756 to receive the transmitted data. For example, if device 760 is determined as being out-of-range for wireless power charging, switch 764 is placed in position $P_2$ to supply all of the received wireless power to receiver 756 to improve, e.g., its signal to noise ratio. Likewise, if device 760 is detected as being within range but requiring no additional charge, switch 764 is placed in position $P_2$ to supply all of the received wireless power to receiver 756. If, for example, data reception is not of interest, switch 764 is placed in position $P_1$ to supply all of the received RF power to power recovery unit 754.

For example, assume that an RF lens or a radiator array (a power generating unit) broadcasts an RF signal to determine if the received RF signal is strong enough to wirelessly charge a device receiving the RF signal. If the received RF signal is detected as not being strong enough to wirelessly charge the device, a controller (not shown in Figure 21C) controlling switch 764 may switch to radio receiving mode by placing switch 764 to position $P_2$. Once in the radio receiving mode, the device may then communicate with the radiator array to enable the radiator array to focus its RF power on the device. After the radiator array focuses its transmitted RF signal on device 760, thereby causing the received RF signal to be sufficient for wireless charging, the controller may place switch 764 in position $P_1$ to enable power recovery unit 754 to charge device 760. When device 760 is charged to a sufficient level, it may so inform the controller thus causing switch 764 to be placed in switch position $P_2$. It is understood that any number of conditions and criteria may be used to change the position of switch 764.

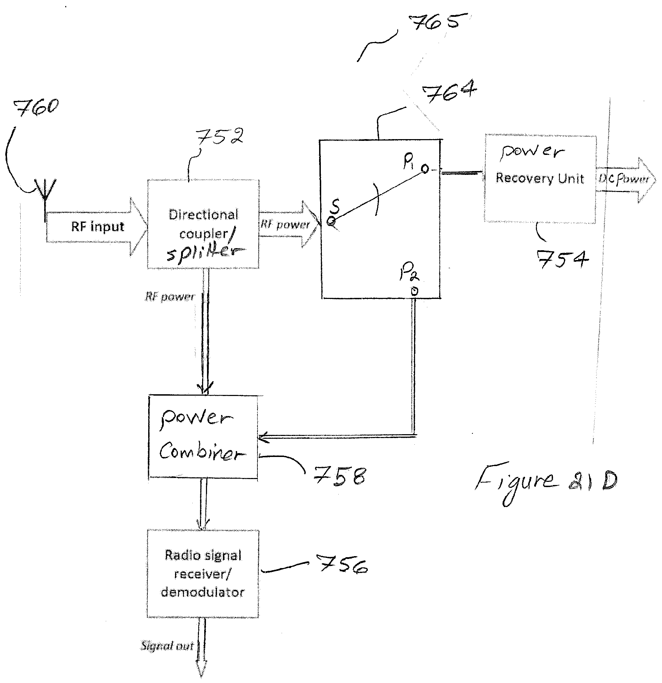

Figure 21D is a simplified high-level block diagram of a device 765, in accordance with another embodiment of the present invention. Device 765 is shown as including, in part, an antenna 760, a coupler 752, a switch 764, a power combiner 758, a power recovery unit 754, and a receiver 756. Antenna 760 is adapted to receive a modulated signal that carries information as well as RF power, both of which are transmitted using the same frequency. Coupler 752 is adapted to transfer a first portion of the received RF signal to power combiner 758, and a second portion of the received signal to switch 764. When switch 764 is position $P_1$, (i) the first portion of the power supplied by coupler 752 is delivered to receiver 756 via power combiner 758, and (ii) the second portion of the power supplied by coupler 752 is delivered to power recovery unit 754 to wirelessly charge device 765. Receiver 756 demodulates the received signal to recover the transmitted data.

When switch 764 is position $P_2$, power combiner 758 combines the first portion of the power it receives from coupler 752 with the second portion of power it receives from switch 764 and delivers the combined power to receiver 756. Accordingly, in such embodiments, receiver 756 continues to receive the transmitted RF signal regardless of the switch position. For example, when the received RF power is detected as being below a threshold value, switch 764 is placed in position $P_2$ (via a controller not shown) so that all the received RF power is used for signal reception. When the received RF power is detected as being above a threshold value and/or device 765 requests to be charged, switch 764 is placed in position $P_1$ (via the controller) so that a relatively small fraction of the received RF power is used for signal detection by receiver 756, and the remainder of the RF power is used by power recovery unit 754 to charge device 765.

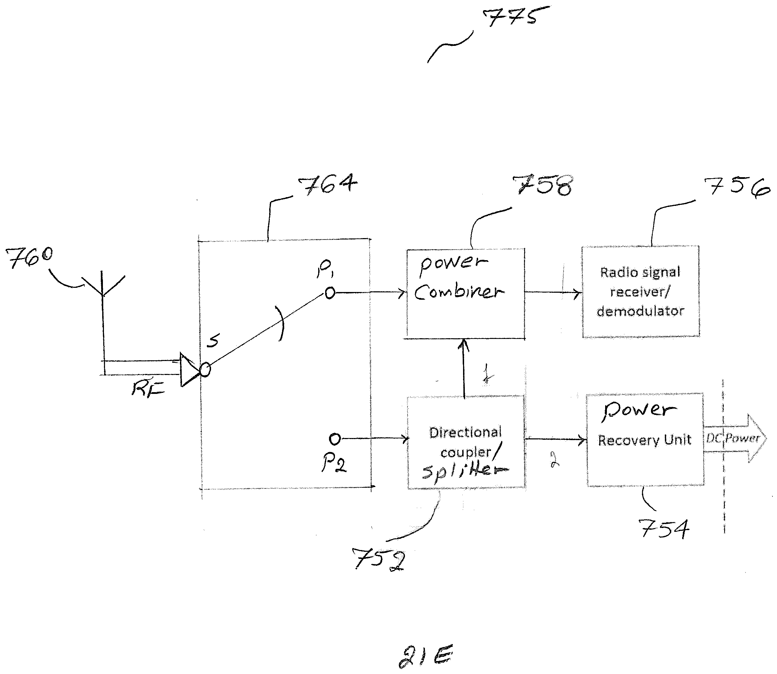

Figure 21E is a simplified high-level block diagram of a device 775, in accordance with another embodiment of the present invention. Device 775 is shown as including, in part, an antenna 760, a coupler 752, a switch 764, a power combiner 758, a power recovery unit 754, and a receiver 756. Antenna 760 is adapted to receive a modulated signal that carries information/data as well as RF power, both of which are transmitted using the same frequency. Receiver 756 demodulates the received signal to recover the transmitted data.

When switch 764 is position $P_2$, the received RF signal is supplied to directional coupler 752, which in turn, delivers (i) a first portion of the received power to receiver 756 via power combiner 758, and (ii) a second portion of the received power to power recovery unit 754 for wirelessly charging device 775. When switch 764 is in position $P_1$, substantially all of the received RF power is delivered to receiver 756 via power combiner 758. Accordingly, device 775 is adapted to continuously deliver the RF signal to receiver 756.

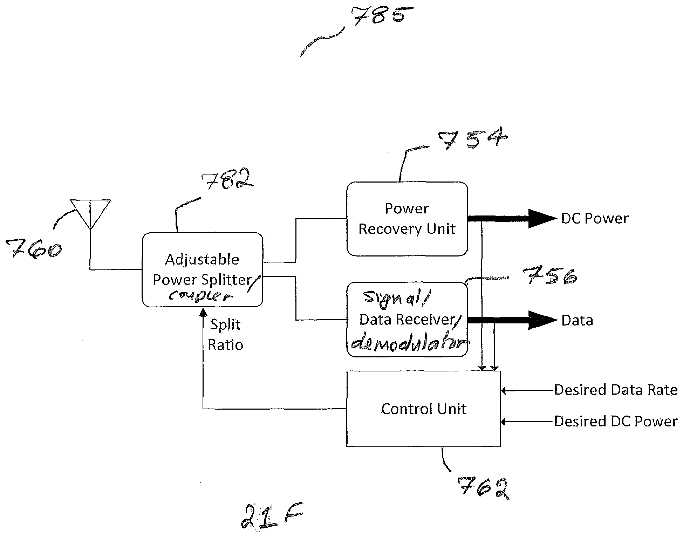

Figure 21F is a simplified high-level block diagram of a device 785, in accordance with another embodiment of the present invention. Device 785 is shown as including, in part, an antenna 760, an adjustable power splitter/coupler 782, a control unit 762, a power recovery unit 754, and a receiver 756. Antenna 760 is adapted to receive a modulated signal that carries information as well as RF power, both of which are transmitted using the same frequency. Adjustable power splitter/coupler 782 is adapted to split the RF signal it receives from antenna 760 into first and second portions in accordance with a split ratio adjustable power splitter/coupler 782 receives from control unit 762. The split ratio supplied by control unit 762 may be defined by any number of factors, such as the target date rate set by receiver 756, the DC power requested by the power recovery unit 754, the power requested by receiver 756, and the like.

Referring to Figures 21A-21E, it is understood that power combiner 758 may be formed using any arrangement or configuration of active and/or passive devices capable of combining power from two or more sources. Typical examples include lossless power combiners such as coupled transmission lines, their lumped circuit equivalent using capacitors or inductors, magnetic transformers, and other circuits, as is well known. Directional coupler 752 may include coupled transmission lines, transformers and/or their lumped circuit equivalent. Switch 764 adapted to switch RF power may include pass gates, electronically tunable impedance networks, relays and the like, as is also well known.

In accordance with another embodiment of the present invention, a pulse based measurement technique is used to track the position of the mobile device. To achieve this, one or more radiators forming the RF lens transmit a pulse during the tracking phase. Upon receiving the pulse, the device being tracked sends a response which is received by the radiators disposed in the array. The travel time of the pulse from the RF lens to the device being tracked together with the travel times of the response pulse from the device being tracked to the RF lens is representative of the position of the device being tracked. In the presence of scatterers, the position of the device could be tracked using such estimation algorithms as maximum likelihood, or least-square, Kalman filtering, a combination of these techniques, or the like. The position of the device may also be determined and tracked using WiFi and GPS signals.

The presence of scattering objects, reflectors and absorbers may affect the RF lens' ability to focus the beam efficiently on the device undergoing wireless charging. For example, Figure 22 shows an RF lens 950 transferring power to device 300 in the presence of a multitude of scattering objects 250. To minimize such effects, the amplitude and phase of the individual radiators of the array may be varied to increase power transfer efficiency. Any one of a number of techniques may be used to vary the amplitude or phase of the individual radiators.

In accordance with one such technique, to minimize the effect of scattering, a signal is transmitted by one or more of the radiators disposed in the RF lens. The signal(s) radiated from the RF lens is scattered by the scattering objects and received by the radiators (see Fig 18). An inverse scattering algorithm is then used to construct the scattering behavior of the environment. Such a construction may be performed periodically to account for any changes that may occur with time. In accordance with another technique, a portion or the entire radiator array may be used to electronically beam-scan the surroundings to construct the scattering behavior from the received waves. In accordance with yet another technique, the device undergoing wireless charging is adapted to periodically send information about the power it receives to the radiator. An optimization algorithm then uses the received information to account for scattering so as to maximize the power transfer efficiency.

In some embodiments, the amplitude/phase of the radiators or the orientation of the RF lens may be adjusted to take advantage of the scattering media. This enable the scattering objects to have the proper phase, amplitude and polarization in order to be used as secondary sources of radiation directing their power towards the device to increase the power transfer efficiency.

The above embodiments of the present invention are illustrative and not limitative. Embodiments of the present invention are not limited by number of radiators disposed in an RF lens, nor are they limited by the number of dimensions of an array used in forming the RF lens. Embodiments of the present invention are not limited by the type of radiator, its frequency of operation, and the like. Embodiments of the present invention are not limited by the type of device that may be wirelessly charged. Embodiments of the present invention are not limited by the type of substrate, semiconductor, flexible or otherwise, in which various components of the radiator may be formed. Other additions, subtractions or modifications are obvious in view of the present disclosure and are intended to fall within the scope of the appended claims.

**Claims**

1. A device comprising an antenna (760) adapted to receive an RF signal comprising modulated data and a controller (762),

   **characterised in that** the device further comprising:

   > an adjustable splitter (782) adapted to split the received RF signal into first and second portions in accordance with a split ratio value said adjustable splitter (782) receives from the controller (762);
   > a receiver (756) adapted to demodulate the data from the first portion of the RF signal; and
   > a power recovery unit (754) adapted to convert the second portion of the RF signal to a DC power to power the device;
   > wherein said value is defined by a target data rate.

2. A device comprising an antenna (760) adapted to receive an RF signal comprising modulated data and a controller (762),

   **characterised in that** the device further comprising:

   > an adjustable splitter (782) adapted to split the received RF signal into first and second portions in accordance with a split ratio value said adjustable splitter (782) receives from the controller (762);
   > a receiver (756) adapted to demodulate the data from the first portion of the RF signal; and

   > a power recovery unit (754) adapted to convert the second portion of the RF signal to a DC power to power the device;
   > wherein said value is defined by a DC power requirement of the device.

3. A method comprising:
   receiving an RF signal comprising modulated data;

   > splitting, using an adjustable splitter (782), the received RF signal into first and second portions in accordance with a received split ratio value said adjustable splitter receives (782) from a controller (762);
   > demodulating, using a receiver (756), the data from the first portion of the RF signal; and
   > converting, using a power recovery unit (754), the second portion of the RF signal to a DC power;
   > wherein said value is defined by a target data rate.

4. A method comprising:

   > receiving an RF signal comprising modulated data;

   > splitting, using an adjustable splitter (782), the received RF signal into first and second portions in accordance with a received split ratio value said adjustable splitter receives (782) from a controller (762);
   > demodulating, using a receiver (756), the data from the first portion of the RF signal; and

   > converting, using a power recovery unit (754), the second portion of the RF signal to a DC power;
   > wherein said value is defined by a DC power requirement.

5. A device comprising an antenna (760) adapted to receive an RF signal comprising modulated data;

**characterised in that** the device further comprising:

a switch (764) coupled to the antenna (760) to receive the RF signal therefrom;

a power combiner (758) coupled to a first output terminal of the switch (764) to receive the RF signal when the switch (764) is in a first position;

a coupler (752) coupled to a second output terminal of the switch (764) to receive the RF signal when the switch (764) is in a second position, said coupler (752) adapted to split the RF signal into a first portion and a second portion, said coupler (752) delivering the first portion of the RF signal to the power combiner (758);

a power recovery unit (754) adapted to convert the second portion of the RF signal to a DC power to charge the device when the switch (764) is in the second position; and

a receiver (756) adapted to demodulate the data from an output signal of the power combiner (758).

6. The device of claim 5 further comprising:
a controller adapted to cause the switch (764) to be in the first position when a power of the received RF signal is less than a threshold value.

7. The device of claim 6 further comprising:
a controller adapted to cause the switch (764) to be in the first position when the device indicates that its DC power exceeds a threshold value.

8. A method comprising:

receiving, by a switch (764), from an antenna (760), an RF signal comprising modulated data;

receiving, by a power combiner (758), the RF signal from the switch (764) when the switch (764) is in a first position;

receiving, by a coupler (752), the RF signal from the switch (764) when the switch (764) is in a second position, said coupler (752) adapted to split the RF signal into a first portion and a second portion, said coupler (752) delivering the first portion of the RF signal to the power combiner (758) and delivering the second portion of the RF signal to a power recovery unit (754) adapted to convert the second portion of the RF signal to a DC power to charge a device;

demodulating, by a receiver (756) receiving an output signal from the power combiner (758), the data using the first portion of the received RF signal when the switch (764) is in the second position or the received RF signal when the switch (764) is in the first position; and

converting, by the power recovery unit (754), the second portion of the RF signal to a DC power when the switch (764) is in the second position.

9. The method of claim 8 further comprising:
demodulating the data using the received RF signal when a power of the received RF signal is less than a first threshold value.

10. The method of claim 9 further comprising:
demodulating the data using the received RF signal when an indication is received that a battery charge exceeds a threshold value.

**Patentansprüche**

1. Eine Vorrichtung, die eine Antenne (760), welche angepasst ist, um ein HF-Signal zu empfangen, das modulierte Daten beinhaltet, und eine Steuereinrichtung (762) beinhaltet,
**dadurch gekennzeichnet, dass** die Vorrichtung ferner Folgendes beinhaltet:

einen einstellbaren Teiler (782), der angepasst ist, um das empfangene HF-Signal in Übereinstimmung mit einem Teilungsverhältniswert, den der einstellbare Teiler (782) von der Steuereinrichtung (762) empfängt, in einen ersten und einen zweiten Anteil zu teilen;

einen Empfänger (756), der angepasst ist, um die Daten aus dem ersten Anteil des HF-Signals zu demodulieren; und

eine Leistungsrückgewinnungseinheit (754), die angepasst ist, um den zweiten Anteil des HF-Signals in eine Gleichstromleistung zum Versorgen der Vorrichtung mit Energie umzuwandeln;

wobei der Wert durch eine Zieldatenrate definiert wird.

2. Eine Vorrichtung, die eine Antenne (760), welche angepasst ist, um ein HF-Signal zu empfangen, das modulierte Daten beinhaltet, und eine Steuereinrichtung (762) beinhaltet,
**dadurch gekennzeichnet, dass** die Vorrichtung ferner Folgendes beinhaltet:

einen einstellbaren Teiler (782), der angepasst ist, um das empfangene HF-Signal in Übereinstimmung mit einem Teilungsverhältniswert, den der einstellbare Teiler (782) von der Steuereinrichtung (762) empfängt, in einen ersten und einen zweiten Anteil zu teilen;
einen Empfänger (756), der angepasst ist, um die Daten aus dem ersten Anteil des HF-Signals zu demodulieren; und
eine Leistungsrückgewinnungseinheit (754), die angepasst ist, um den zweiten Anteil des HF-Signals in eine Gleichstromleistung zum Versorgen der Vorrichtung mit Energie umzuwandeln;
wobei der Wert durch eine Gleichstromleistungsanforderung der Vorrichtung definiert wird.

3. Ein Verfahren, das Folgendes beinhaltet:

Empfangen eines HF-Signals, das modulierte Daten beinhaltet;
Teilen, unter Verwendung eines einstellbares Teilers (782), des empfangenen HF-Signals in Übereinstimmung mit einem empfangenen Teilungsverhältniswert, den der einstellbare Teiler (782) von einer Steuereinrichtung (762) empfängt, in einen ersten und einen zweiten Anteil;
Demodulieren, unter Verwendung eines Empfängers (756), der Daten aus dem ersten Anteil des HF-Signals; und
Umwandeln, unter Verwendung einer Leistungsrückgewinnungseinheit (754), des zweiten Anteils des HF-Signals in eine Gleichstromleistung;
wobei der Wert durch eine Zieldatenrate definiert wird.

4. Ein Verfahren, das Folgendes beinhaltet:

Empfangen eines HF-Signals, das modulierte Daten beinhaltet;
Teilen, unter Verwendung eines einstellbares Teilers (782), des empfangenen HF-Signals in Übereinstimmung mit einem empfangenen Teilungsverhältniswert, den der einstellbare Teiler (782) von einer Steuereinrichtung (762) empfängt, in einen ersten und einen zweiten Anteil;
Demodulieren, unter Verwendung eines Empfängers (756), der Daten aus dem ersten Anteil des HF-Signals; und
Umwandeln, unter Verwendung einer Leistungsrückgewinnungseinheit (754), des zweiten Anteils des HF-Signals in eine Gleichstromleistung;
wobei der Wert durch eine Gleichstromleistungsanforderung definiert wird.

5. Eine Vorrichtung, die eine Antenne (760) beinhaltet, welche angepasst ist, um ein HF-Signal zu empfangen, das modulierte Daten beinhaltet;
**dadurch gekennzeichnet, dass** die Vorrichtung ferner Folgendes beinhaltet:

einen Schalter (764), der mit der Antenne (760) gekoppelt ist, um von ihr das HF-Signal zu empfangen;
einen Leistungskombinator (758), der mit einem ersten Ausgangsanschluss des Schalters (764) gekoppelt ist, um das HF-Signal zu empfangen, wenn sich der Schalter (764) in einer ersten Stellung befindet;
einen Koppler (752), der mit einem zweiten Ausgangsanschluss des Schalters (764) gekoppelt ist, um das HF-Signal zu empfangen, wenn sich der Schalter (764) in einer zweiten Stellung befindet, wobei der Koppler (752) angepasst ist, um das HF-Signal in einen ersten Anteil und einen zweiten Anteil zu teilen, wobei der Koppler (752) den ersten Anteil des HF-Signals an den Leistungskombinator (758) liefert;
eine Leistungsrückgewinnungseinheit (754), die angepasst ist, um den zweiten Anteil des HF-Signals in eine Gleichstromleistung umzuwandeln, um die Vorrichtung zu laden, wenn sich der Schalter (764) in der zweiten Stellung befindet; und
einen Empfänger (756), der angepasst ist, um die Daten aus einem Ausgangssignal des Leistungskombinators (758) zu demodulieren.

6. Vorrichtung gemäß Anspruch 5, die ferner Folgendes beinhaltet:
eine Steuereinrichtung, die angepasst ist, um zu bewirken, dass sich der Schalter (764) in der ersten Stellung befindet, wenn eine Leistung des empfangenen HF-Signals kleiner als ein Schwellenwert ist.

7.  Vorrichtung gemäß Anspruch 6, die ferner Folgendes beinhaltet:
eine Steuereinrichtung, die angepasst ist, um zu bewirken, dass sich der Schalter (764) in der ersten Stellung befindet, wenn die Vorrichtung angibt, dass ihre Gleichstromleistung einen Schwellenwert übertrifft.

8.  Ein Verfahren, das Folgendes beinhaltet:

Empfangen, durch einen Schalter (764) von einer Antenne (760), eines HF-Signals, das modulierte Daten beinhaltet;
Empfangen, durch einen Leistungskombinator (758), des HF-Signals von dem Schalter (764), wenn sich der Schalter (764) in einer ersten Stellung befindet;
Empfangen, durch einen Koppler (752), des HF-Signals von dem Schalter (764), wenn sich der Schalter (764) in einer zweiten Stellung befindet, wobei der Koppler (752) angepasst ist, um das HF-Signal in einen ersten Anteil und einen zweiten Anteil zu teilen, wobei der Koppler (752) den ersten Anteil des HF-Signals an den Leistungskombinator (758) liefert und den zweiten Anteil des HF-Signals an eine Leistungsrückgewinnungseinheit (754) liefert, die angepasst ist, um den zweiten Anteil des HF-Signals in eine Gleichstromleistung umzuwandeln, um eine Vorrichtung zu laden;
Demodulieren, durch einen Empfänger (756), der ein Ausgangssignal von dem Leistungskombinator (758) empfängt, der Daten unter Verwendung des ersten Anteils des empfangenen HF-Signals, wenn sich der Schalter (764) in der zweiten Stellung befindet, oder des empfangenen HF-Signals, wenn sich der Schalter (764) in der ersten Stellung befindet; und
Umwandeln, durch die Leistungsrückgewinnungseinheit (754), des zweiten Anteils des HF-Signals in eine Gleichstromleistung, wenn sich der Schalter (764) in der zweiten Stellung befindet.

9.  Verfahren gemäß Anspruch 8, das ferner Folgendes beinhaltet:
Demodulieren der Daten unter Verwendung des empfangenen HF-Signals, wenn eine Leistung des empfangenen HF-Signals kleiner als ein erster Schwellenwert ist.

10. Verfahren gemäß Anspruch 9, das ferner Folgendes beinhaltet:
Demodulieren der Daten unter Verwendung des empfangenen HF-Signals, wenn eine Angabe empfangen wird, dass eine Batterieladung einen Schwellenwert übertrifft.


**Revendications**

1.  Un dispositif comprenant une antenne (760) conçue pour recevoir un signal RF comprenant des données modulées et un organe de commande (762), **caractérisé en ce que** le dispositif comprend en outre :

un diviseur réglable (782) conçu pour diviser le signal RF reçu en des première et deuxième portions conformément à une valeur de rapport de division que ledit diviseur réglable (782) reçoit en provenance de l'organe de commande (762) ;
un récepteur (756) conçu pour démoduler les données à partir de la première portion du signal RF ; et
une unité de récupération de puissance (754) conçue pour convertir la deuxième portion du signal RF en une puissance CC pour alimenter le dispositif ;
dans lequel ladite valeur est définie par un débit de données cible.

2.  Un dispositif comprenant une antenne (760) conçue pour recevoir un signal RF comprenant des données modulées et un organe de commande (762), **caractérisé en ce que** le dispositif comprend en outre :

un diviseur réglable (782) conçu pour diviser le signal RF reçu en des première et deuxième portions conformément à une valeur de rapport de division que ledit diviseur réglable (782) reçoit en provenance de l'organe de commande (762) ;
un récepteur (756) conçu pour démoduler les données à partir de la première portion du signal RF ; et
une unité de récupération de puissance (754) conçue pour convertir la deuxième portion du signal RF en une puissance CC pour alimenter le dispositif ;
dans lequel ladite valeur est définie par une puissance CC requise du dispositif.

3.  Un procédé comprenant :

la réception d'un signal RF comprenant des données modulées ;

la division, en utilisant un diviseur réglable (782), du signal RF reçu en des première et deuxième portions conformément à une valeur de rapport de division reçue que ledit diviseur réglable (782) reçoit en provenance d'un organe de commande (762) ;

la démodulation, en utilisant un récepteur (756), des données à partir de la première portion du signal RF ; et

la conversion, en utilisant une unité de récupération de puissance (754), de la deuxième portion du signal RF en une puissance CC ;

dans lequel ladite valeur est définie par un débit de données cible.

4. Un procédé comprenant :

la réception d'un signal RF comprenant des données modulées ;

la division, en utilisant un diviseur réglable (782), du signal RF reçu en des première et deuxième portions conformément à une valeur de rapport de division reçue que ledit diviseur réglable (782) reçoit en provenance d'un organe de commande (762) ;

la démodulation, en utilisant un récepteur (756), des données à partir de la première portion du signal RF ; et

la conversion, en utilisant une unité de récupération de puissance (754), de la deuxième portion du signal RF en une puissance CC ;

dans lequel ladite valeur est définie par une puissance CC requise.

5. Un dispositif comprenant une antenne (760) conçue pour recevoir un signal RF comprenant des données modulées ; **caractérisé en ce que** le dispositif comprend en outre :

un commutateur (764) couplé à l'antenne (760) pour en recevoir le signal RF ;

un combineur de puissance (758) couplé à une première borne de sortie du commutateur (764) pour recevoir le signal RF lorsque le commutateur (764) est dans une première position ;

un coupleur (752) couplé à une deuxième borne de sortie du commutateur (764) pour recevoir le signal RF lorsque le commutateur (764) est dans une deuxième position, ledit coupleur (752) étant conçu pour diviser le signal RF en une première portion et une deuxième portion, ledit coupleur (752) délivrant la première portion du signal RF au combineur de puissance (758) ;

une unité de récupération de puissance (754) conçue pour convertir la deuxième portion du signal RF en une puissance CC pour charger le dispositif lorsque le commutateur (764) est dans la deuxième position ; et

un récepteur (756) conçu pour démoduler les données à partir d'un signal de sortie du combineur de puissance (758).

6. Le dispositif de la revendication 5 comprenant en outre :
un organe de commande conçu pour amener le commutateur (764) à être dans la première position lorsqu'une puissance du signal RF reçu est inférieure à une valeur seuil.

7. Le dispositif de la revendication 6 comprenant en outre :
un organe de commande conçu pour amener le commutateur (764) à être dans la première position lorsque le dispositif indique que sa puissance CC dépasse une valeur seuil.

8. Un procédé comprenant :

la réception, par un commutateur (764), en provenance d'une antenne (760), d'un signal RF comprenant des données modulées ;

la réception, par un combineur de puissance (758), du signal RF en provenance du commutateur (764) lorsque le commutateur (764) est dans une première position ;

la réception, par un coupleur (752), du signal RF en provenance du commutateur (764) lorsque le commutateur (764) est dans une deuxième position, ledit coupleur (752) étant conçu pour diviser le signal RF en une première portion et une deuxième portion, ledit coupleur (752) délivrant la première portion du signal RF au combineur de puissance (758) et délivrant la deuxième portion du signal RF à une unité de récupération de puissance (754) conçue pour convertir la deuxième portion du signal RF en une puissance CC pour charger un dispositif ;

la démodulation, par un récepteur (756) recevant un signal de sortie en provenance du combineur de puissance (758), des données en utilisant la première portion du signal RF reçu lorsque le commutateur (764) est dans la deuxième position ou le signal RF reçu lorsque le commutateur (764) est dans la première position ; et

la conversion, par l'unité de récupération de puissance (754), de la deuxième portion du signal RF en une puissance CC lorsque le commutateur (764) est dans la deuxième position.

9. Le procédé de la revendication 8 comprenant en outre :
la démodulation des données en utilisant le signal RF reçu lorsqu'une puissance du signal RF reçu est inférieure à une première valeur seuil.

10. Le procédé de la revendication 9 comprenant en outre :
la démodulation des données en utilisant le signal RF reçu lorsqu'une indication est reçue qu'une charge de batterie dépasse une valeur seuil.

A

$10_1$ $10_2$ $10_3$ 104 $10_{N-2}$ $10_{N-1}$ $10_N$

*FIG. 1*

d1

$10_1$ $10_2$

$y_1$ $A_1 e^{j\theta 1}$
$y_2$ $A_2 e^{j\theta 2}$ $S_1$
$y_3$ $A_3 e^{j\theta 3}$ $S_2$
$10_3$
A 104
$y_{n-2}$ $A_{n-2} e^{j\theta n-2}$
$y_{n-1}$ $A_{n-1} e^{j\theta n-1}$ $S_N$
$y_n$ $A_n e^{j\theta n}$

102

$10_N$ $10_{N-1}$ $10_{N-2}$

*FIG. 2*

d2 < d1

$y_1$ $A_1 e^{j\theta 1}$
$y_2$ $A_2 e^{j\theta 2}$
$y_3$ $A_3 e^{j\theta 3}$
104
102
$y_{n-2}$ $A_{n-2} e^{j\theta n-2}$
$y_{n-1}$ $A_{n-1} e^{j\theta n-1}$
$y_n$ $A_n e^{j\theta n}$

*FIG. 3*

*FIG. 4*

*FIG. 5*

*FIG. 6A*

*FIG. 6B*

*FIG. 7*

FIG. 8

*FIG. 9*

FIG. 10

FIG. 11A

FIG. 11B

FIG. 12

FIG. 13A

FIG. 13B

*FIG. 14A*

*FIG. 14B*

FIG. 15A

FIG. 15B

FIG. 16A

FIG. 16B

FIG. 17A

FIG. 17B

FIG. 18

FIG. 19

FIG. 20

EP 3 353 793 B1

750

752    754

760    RF input    Directional coupler/ splitter    RF power    power Recovery Unit    DC power

RF power

Radio signal receiver/ demodulator    756

Signal out

Figure 21A

755

762

754

760

RF input

Controller

RF power

power
Recovery Unit

DC power

RF power

Radio signal
receiver/
demodulator

756

Signal out

Figure 21B

EP 3 353 793 B1

EP 3 353 793 B1

760

764

754

RF input

S

$P_1$

$P_2$

RF power

power
Recovery Unit

DC Power

760

RF power

756

Radio signal
receiver/
demodulator

Signal out

Figure 21C

760

752

765

764

Power
Recovery Unit

DC Power

RF input

Directional
coupler/
splitter

RF power

$P_1$

$S$

$P_2$

754

RF power

power
Combiner

758

Figure 21 D

Radio signal
receiver/
demodulator

756

Signal out

32

*785*

*754*

*762*

*760*

Adjustable
Power Splitter/
*coupler*

Split
Ratio

Power
Recovery Unit

DC Power

*756*

Signal /
Data Receiver/
demodulator

Data

Control Unit

Desired Data Rate

Desired DC Power

*762*

*21F*

FIG. 22

FIG. 23A

FIG. 23B

**REFERENCES CITED IN THE DESCRIPTION**

**Patent documents cited in the description**

- US 4552249 A
- US 14552414 B
- US 14830692 B
- US 6972462 B
- US 20120091799
- US 2010142509
- US 2011218014
- US 10320242 B
- US 14552249 B